(19)

Europäisches
Patentamt
European
Patent Office
Office européen
des brevets

(11) **EP 4 578 576 A1**

(12) **EUROPEAN PATENT APPLICATION**

(43) Date of publication:
**02.07.2025 Bulletin 2025/27**

(21) Application number: **23383404.3**

(22) Date of filing: **29.12.2023**

(51) International Patent Classification (IPC):
*B22F 10/25* (2021.01)     *B22F 7/08* (2006.01)
*B22F 9/08* (2006.01)      *B23K 26/34* (2014.01)
*C23C 24/10* (2006.01)     *B33Y 10/00* (2015.01)
*C23C 4/06* (2016.01)      *C23C 4/073* (2016.01)
*C23C 4/131* (2016.01)     *B23K 26/342* (2014.01)
*B23K 35/30* (2006.01)     *C22C 33/02* (2006.01)
*C22C 30/00* (2006.01)

(52) Cooperative Patent Classification (CPC):
**B22F 7/08; B22F 10/25; B23K 26/34; B23K 26/342;
B23K 35/0244; B23K 35/308; B23K 35/3086;
B23K 35/32; B32B 15/011; C22C 27/06;
C22C 33/0285; C22C 38/04; C22C 38/34;
C22C 38/44; C23C 4/06;** (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Fundación Azterlan
48200 Durango, Vizcaya (ES)**

(72) Inventors:
• **FERNÁNDEZ CALVO, Ana Isabel
48200 Durango, Vizcaya (ES)**
• **LASHERAS, Xabier
48200 Durango, Vizcaya (ES)**
• **ARRUABARRENA, Jon
48200 Durango, Vizcaya (ES)**
• **ARTOLA, Garikoitz
48200 Durango, Vizcaya (ES)**

(74) Representative: **Balder IP Law, S.L.
Paseo de la Castellana 93
5ª planta
28046 Madrid (ES)**

(54) **METHOD FOR PREPARING A STAINLESS STEEL ADDITIVE COATING**

(57)     The present invention relates to a method for preparing stainless steel additive coatings for steel substrates. Additionally, the present invention relates to a stainless steel additive coating obtainable by said method and to a steel substrate coated with said stainless steel additive coating. Finally, the present invention is directed to the use of said stainless steel additive coating in the production of stainless steel coated steel materials.

Figure 2

EP 4 578 576 A1

(Cont. next page)

(52) Cooperative Patent Classification (CPC): (Cont.)
**C23C 4/073; C23C 4/131; C23C 24/106;**
B22F 9/082; B22F 2009/0824; C22C 30/00

**Description**

**TECHNICAL FIELD**

The present invention relates to a method for preparing stainless steel additive coatings for steel substrates. The present invention also relates to the stainless steel coating obtainable by the said method and its use.

**STATE OF THE ART**

Laser-mediated Direct Energy Deposition (L-DED) is one of the most employed additive manufacturing technologies in recent years. The industrial applicability of this method has become increasingly relevant due to its efficacy in producing materials with optimized surface properties and complex surface geometries.

In particular, L-DED presents an interesting approach for the surface modification of standard structural steel with stainless steel. By employing L-DED to deposit stainless steel onto structural steel, it becomes possible to maintain base material properties with enhanced anti-corrosive and anti-oxidative properties in the overlay areas. Furthermore, it allows the modification of surface morphology to create specialized surface geometries with a high degree of precision.

Several issues must be considered when applying this method, as they are listed below:

Firstly, the L-DED procedure involves the fusion of the applied material (powder or wire) with partial fusion of the substrate material. Consequently, a fusion of the two materials occurs in the deposited area of the workpiece. Thus, the overlay chemical composition is a mix of the powder with the substrate, potentially modifying the properties of the stainless steel overlay. The commonly applied corrective method to maintain the surface properties to address the described dilution effect, involves the addition of further stainless steel layers through subsequent L-DED deposition process. This approach ultimately eliminates the dilution effect, resulting in the desired chemically controlled stainless steel surface with its high performance properties.

However, this solution is not the optimal, as it forces to apply additional L-DED processes, which, in ideal conditions, would not be required. Furthermore, it generates an additional need for extra machining to provide the component with the final finishing and geometry, increasing significantly the production cost of the component, in addition to the cost incurred due to the extra material that must be used in the additional L-DED processes.

It should also be considered that the L-DED process has a well-known additional disadvantage: the surface finishing obtained generate crests and valleys that subsequently need to be machined.

The L-DED technique, especially when applied over high carbon content steels, is susceptible to generate defects such as oxides, and pores in the deposited materials. These defects could compromise the performance of the final part. The impact of this effect is amplified by the additional coating procedure described earlier, since the higher the number of layers, the higher the risk of having defects.

Alternative methods for achieving surface modification include arc welding overlay and Extreme High-Speed Laser Application (EHLA). EHLA can be a promising alternative, as it offers a faster process with minimal mixing between the substrate and the deposited material. However, EHLA is only suitable for thin coating layers and is not practical for creating extensive layers or complex surface geometries. The same dilution problem described for the L-DED process applies to the arc welding overlay method, as a significant portion of substrate is molten due to the high temperature applied, leading to significant chemical alterations.

Therefore, there is a need for developing new methods for preparing L-DED coating that avoid the above-mentioned problems of currently known methods.

The present invention overcomes the drawbacks mentioned above by providing a method to prepare a stainless steel additive coating having the desired properties in a single coating process.

**BRIEF DESCRIPTION OF THE INVENTION**

The authors of the present invention have developed a method for obtaining a stainless steel additive coating by deposition in a single coating process. The method of the present invention allows to compensate the dilution effect by incorporating a counteract powder to the stainless steel and, thus, obtaining the target chemical composition of the stainless steel coating. In the method of the present invention, the counteract powder is specifically tailored for the selected target stainless steel in each process. In addition, the appearance of defects and the presence of surface valleys in the coating layer is minimized.

Therefore, a first aspect of the present invention is directed to a method for preparing a stainless steel additive coating, comprising the steps of:

a) placing a base steel material as a substrate for coating;
b) providing a stainless steel material and a counteract powder; and

c) depositing by melting with an energy source the stainless steel material and the counteract powder from step b) on the surface of the base steel material to form a stainless steel additive coating layer on the surface of said base steel material;

characterized in that

the energy source is a laser beam; and
the counteract powder comprises elements selected from C, Mn, P, S, Si, Cr, Ni, Mo, N, Cu, Al, Ti, W, Nb, Ce, Ba, La, Ta, B and Fe, wherein the content of each element, except C, P, S, N and Fe, in the counteract powder is calculated according to equation (1)

$$[\%X_{CP}] = \frac{\left(\left(R_{[\%X]}+1\right)\cdot[\%X_{SSC}]\right)-\left(\left(1-\frac{Z}{100}\right)\cdot R_{[\%X]}\cdot[\%X_{SS}]\right)-[\%X_{BS}]}{\frac{Z}{100}\cdot R_{[\%X]}} \qquad (1)$$

wherein

X is an element X selected from Mn, Si, Cr, Ni, Mo, Cu, Al, Ti, W, Nb, Ce, Ba, La, Ta and B;
$[\%X_{CP}]$ is the weight percent content of element X in the counteract powder respect to the total weight of the counteract powder;
Z is the percentage in weight of the counteract powder provided with (100-Z) percentage of the stainless steel material in step (b);
$[\%X_{SS}]$ is the weight percent content of element X in the stainless steel material with respect to the total weight of the stainless steel material;
$R_{[\%X]}$ is the ratio coefficient for element X;
$[\%X_{BS}]$ is the weight percent content of element X in the base steel material respect to the total weight of the base steel material; and
$[\%X_{SSC}]$ is the weight percent content of element X in the stainless steel coating resulting from step c) respect to the total weight of the stainless steel coating resulting from step c); and
wherein $R_{[\%X]}$ is calculated according to equation (2) under the selected method conditions of step c)

$$R_{[\%X]} = \frac{[\%X_{SSC}]-[\%X_{BS}]}{[\%X_{SS}]-[\%X_{SSC}]} \ (2).$$

A second aspect of the present invention is directed to a stainless steel additive coating obtainable by the method according to the method of the present invention.
A third aspect of the present invention is directed to steel substrate coated with the stainless steel additive coating obtainable by the method according to the method of the present invention.
A final aspect of the present invention is directed to the use of the stainless steel additive coating obtainable by the method according to the method of the present invention in the production of stainless steel coated steel materials.
Additional advantages and features of the invention will become apparent from the detailed description that follows and will be particularly pointed out in the appended claims.

## BRIEF DESCRIPTION OF THE DRAWINGS

To complete the description and provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:

Figure 1 shows the dilution effect schematic description and the way to calculate the dilution coefficients for each element.

Figure 2 shows an overview of the parameters essential for completing equation (1) and to determine the chemical composition of the counteract powder.

Figure 3 shows a scheme of a melt casted in three sand moulds for obtaining Y2 keel blocks wherein the shadow area with "x" height is used to extract tensile test bars to measure mechanical properties.

Figure 4 shows a microstructure obtained by optical microscope of the SSC deposited single coating, being the measured values of u = 860 $\mu$m and v = 870 $\mu$m.

## DESCRIPTION OF THE INVENTION

Unless defined otherwise, all technical and scientific terms used herein have the same meaning as commonly understood to one of ordinary skill in the art to which this disclosure belongs.

The method of the present invention intends to solve the shortcomings of prior-art methods for obtaining stainless steel additive coatings, which is carried out by using the L-DED technique, mitigating chemical composition alterations and surface defects.

Thus, it is an object of the present invention to provide a method for preparing stainless steel additive coatings.

In particular, the method of the present invention comprises the steps of:

placing a base steel material as a substrate for coating;
providing a stainless steel material and a counteract powder; and
depositing by melting with an energy source the stainless steel material and a counteract powder from step b) on the surface of the base steel material to form a stainless steel additive coating layer on the surface of said base steel material;
characterized in that
the energy source is a laser beam; and
the counteract powder comprises elements selected from C, Mn, P, S, Si, Cr, Ni, Mo, N, Cu, Al, Ti, W, Nb, Ce, Ba, La, Ta, B and Fe, wherein the content of each element, except C, P, S, N and Fe, in the counteract powder is calculated according to equation (1)

$$[\%X_{CP}] = \frac{\left(\left(R_{[\%X]}+1\right)\cdot[\%X_{SSC}]\right)-\left(\left(1-\frac{Z}{100}\right)\cdot R_{[\%X]}\cdot[\%X_{SS}]\right)-[\%X_{BS}]}{\frac{Z}{100}\cdot R_{[\%X]}} \qquad (1)$$

wherein

X is an element X selected from Mn, Si, Cr, Ni, Mo, Cu, Al, Ti, W, Nb, Ce, Ba, La, Ta and B;
$[\%X_{CP}]$ is the weight percent content of element X in the counteract powder respect to the total weight of the counteract powder;
Z is the percentage in weight of the counteract powder provided with (100-Z) percentage of the stainless steel material in step (b);
$[\%X_{SS}]$ is the weight percent content of element X in the stainless steel material with respect to the total weight of the stainless steel material,
$R_{[\%X]}$ is the ratio coefficient for element X,
$[\%X_{BS}]$ is the weight percent content of element X in the base steel material respect to the total weight of the base steel material; and
$[\%X_{SSC}]$ is the weight percent content of element X in the stainless steel coating resulting from step c) respect to the total weight of the stainless steel coating resulting from step c); and
wherein $R_{[\%X]}$ is calculated according to equation (2) according to method conditions of step c)

$$R_{[\%X]} = \frac{[\%X_{SSC}]-[\%X_{BS}]}{[\%X_{SS}]-[\%X_{SSC}]} (2).$$

As previously mentioned, the method of the present invention comprises a step a) of placing a base steel material as a substrate for coating.

The term "steel" refers to an alloy of iron and carbon with improved strength and fracture resistance compared to other forms of iron. Many other elements may be present or added. Non-limitative examples of base steels suitable in the method of the present invention are those specified in the European standards EN 10132, EN 10083-3, EN 10305-1, EN 10263-4, EN 10250-3 and EN 10132-3.

By depositing stainless steel onto structural steel, it becomes possible to maintain base steel material properties with enhanced anti-corrosive and anti-oxidative properties in the coated areas.

Thus, as previously mentioned, the method of the present invention comprises a step b) of providing a stainless steel material and a counteract powder.

The term "stainless steel" (also known as "inox", "corrosion-resistant steel (CRES)" and "rustless steel") is an alloy of iron that is resistant to rusting and corrosion. It contains at least 10.5% chromium and usually nickel, and may also contain other elements, such as molybdenum and carbon, to obtain the desired properties. Stainless steel's resistance to corrosion results from the chromium, which forms a passive film that can protect the material and self-heal in the presence of oxygen. Stainless steels, which are resistant to corrosion and oxidation, typically need an additional 11% chromium.

The different types of stainless steel are labeled with an AISI three-digit number. The ISO 15510 standard lists the chemical compositions of stainless steels of the specifications in existing ISO, ASTM, EN, JIS, and GB standards.

The method of the present invention is applicable to any stainless steels with a chromium content exceeding 10 wt. %. Non-limitative examples of stainless steels suitable in the method of the present invention are those specified in ASTM standards A240, A351, and A995.

Once the chemical composition of the steel material (substrate material to be coated) and the stainless steel coating (herein also referred as "target") are selected, the chemical composition of the counteract powder can be calculated.

The primary function of the counteract powder is to counterbalance the inherent dilution effect of the L-DED deposited stainless steel material with the steel substrate. Consequently, the specific composition of this counteract powder must be determined based on the dilution values of each element in the selected L-DED process parameter conditions and taking into account the known dilution coefficients caused by the laser interaction in the applied conditions.

Thus, in the method of the present invention, the counteract powder comprises elements selected from C, Mn, P, S, Si, Cr, Ni, Mo, N, Cu, Al, Ti, W, Nb, Ce, Ba, La, Ta, B and Fe. In the counteract powder of the present invention, in all cases, contains significant percentages of chromium and nickel, and in some instances, molybdenum.

According to the method of the present invention, the content of each element, that is, Mn, Si, Cr, Ni, Mo, Cu, Al, Ti, W, Nb, Ce, Ba, La, Ta and B, in the counteract powder is calculated according to equation (1).

$$[\%X_{CP}] = \frac{\left(\left(R_{[\%X]}+1\right)\cdot[\%X_{SSC}]\right) - \left(\left(1-\frac{Z}{100}\right)\cdot R_{[\%X]}\cdot[\%X_{SS}]\right) - [\%X_{BS}]}{\frac{Z}{100}\cdot R_{[\%X]}} \qquad (1)$$

In equation (1) X is an element X selected from Mn, Si, Cr, Ni, Mo, Cu, Al, Ti, W, Nb, Ce, Ba, La, Ta and B.

[%X$_{CP}$] is the weight percent content of element X in the counteract powder respect to the total weight of the counteract powder.

Z is the percentage in weight of the counteract powder provided with (100-Z) percentage of the stainless steel material in step (b).

In a preferred embodiment, Z is between 5 % and 20 %, in a more preferred embodiment, Z is between 8 % and 15 %.

[%X$_{SS}$] is the weight percent content of element X in the stainless steel material of step b) with respect to the total weight of said stainless steel material.

[%X$_{SS}$] is the weight percent content of element X in the selected base steel material of step a) respect to the total weight of said base steel material.

[%X$_{SSC}$] is the weight percent content of element X in the stainless steel coating resulting from step c) (deposition step) of the method of the present invention respect to the total weight of said stainless steel coating.

R$_{[\%X]}$ is the ratio coefficient for element X, wherein R$_{[\%X]}$ is calculated according to equation (2) according to method conditions of step c)

$$R_{[\%X]} = \frac{[\%X_{SSC}] - [\%X_{BS}]}{[\%X_{SS}] - [\%X_{SSC}]} \qquad (2)$$

R$_{[\%X]}$ can also be calculated according to equation (3)

$$R_{[\%X]} = \frac{x_{SS}}{y_{BS}} \qquad (3)$$

Wherein x$_{ss}$ is the mass in grams of stainless steel deposited and yss is the mass in grams of the base steel melt.

$R_{[\%X]}$ allows to measure the dilution effect for each element based on a reference stainless steel coating (RC) previously deposited (with no counteract powder) in the selected steel substrate at the selected processing conditions.

Thus, in another embodiment, the method of the present invention, further comprises a step of depositing by melting with an energy source the stainless steel material from step b) on the surface of the base steel material to form a reference stainless steel additive coating layer on the surface of the base steel.

The counteract powder of the method of the present invention, in all cases, contains significant percentages of chromium and nickel, and in some instances, molybdenum. Other alloy elements such as manganese, copper, carbon, or silicon may be required depending on the specific stainless steel target.

In a preferred embodiment, the counteract powder comprises Cr and Ni, being [%Cr$_{CP}$] equal or higher than 11 wt. % and the [%Ni$_{CP}$] equal or higher than 0.4 wt.% respect to the total weight of the counteract powder.

In cases where the target stainless steel includes molybdenum in its composition, the counteract powder further comprises Mo, being [%Mo$_{CP}$] equal or higher than 1.5 wt.% respect to the total weight of the counteract powder.

The content of carbon, phosphorus, sulphur, nitrogen and iron in the counteract powder are not calculated with equation (1) except in C alloyed stainless steels. Carbon, phosphorus, sulphur appear as residual elements in the different raw materials and they are usually kept as minimum as possible in stainless steels in non-carbon alloyed stainless steels. Nitrogen is typically not intentionally introduced into the steelmaking process through an atmospheric reaction and it is often considered an undesirable impurity in stainless steels. Fe in the counteract powder makes up the balance to 100 %, along with the calculated alloying elements obtained from Eq. (1) and impurities, being dependent on the specific stainless steel target.

In a preferred embodiment, the counteract powder comprises C in an amount lower or equal than 0.04 wt. % respect to the total weight of the counteract powder.

In a preferred embodiment, the counteract powder comprises P, S and N in an amount lower than 0.07 wt. % respect to the total weight of the counteract powder.

In a preferred embodiment, the counteract powder comprises Fe in an amount lower than 88.6 wt. % respect to the total weight of the counteract powder.

As previously mentioned, the method of the present invention, further comprises a step c) of depositing by melting with an energy source the stainless steel material and a counteract powder from step b) on the surface of the base steel material to form a stainless steel additive coating layer on the surface of the base steel.

The stainless steel of step b) can be used in the form of powder or wire.

In a particular embodiment, the stainless steel of step b) is in the form of powder and the method of the present invention comprises an additional step between step b) and step c) of mixing the stainless steel powder and the counteract powder before the deposition. The mixing of the stainless steel powder and the counteract powder before the deposition is a physical mixing process that can be performed by routine methods well-known by a skilled person.

In another particular embodiment, the stainless steel material of step b) is in the form of powder, which is directly mixed (combined) in the deposition step c) with the counteract powder, and, particularly, both supplied in the proportions Z (for the counteract powder) and (100-Z) (for the stainless steel powder), through two different nozzles or through the same noozle.

In another particular embodiment, the stainless steel of step b) is in the form of powder, which is directly mixed in the deposition step c) with the counteract powder both supplied in the proportions Z (for the counteract powder) and (100-Z) (for the stainless steel powder) through two different nozzles.

In another particular embodiment, the stainless steel material of step b) is in the form of wire. In this case, the method of the present invention does not further comprise any additional step between step b) and the deposition step c), and the counteract powder is supplied in the proportions Z (for the counteract powder) and (100-Z) (for the stainless steel wire) through two different nozzles.

The energy source of step c) of the method of the present invention is a laser beam.

In a preferred embodiment, step c) of the method of the present invention is performed by using the Laser-mediated Direct Energy Deposition (L-DED) technique.

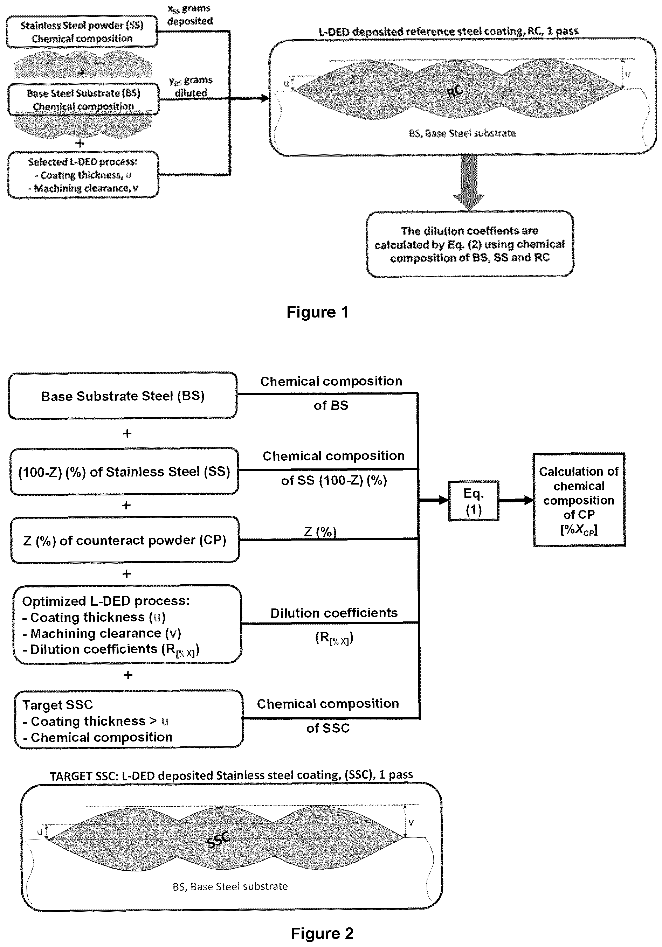

In the context of the present invention, the term "Laser-mediated Direct Energy Deposition" or "L-DED" technique refers to a process used in the production of a three-dimensional object via additive manufacturing. In the L-DED technique, a high-power laser is used to melt metal powder supplied to the focus of the laser beam. The laser beam typically travels through the center of the deposition head and is focused to a small spot by one or more lenses. The deposition head is moved up vertically as each layer is completed in multilayer deposition. Metal powder or metal wire is delivered and distributed around the circumference of the head or can be split by an internal manifold and delivered through nozzles arranged in various configurations around the deposition head. The laser beam is used to heat up and create a "melt pool" on the substrate, in which the new powder or wire is injected quasi-simultaneously. L-DED technique can also feed a wire through a nozzle that is melted by a laser using inert gas shielding in either an open environment (gas surrounding the laser), or in a sealed chamber. Electron beam freeform fabrication uses an electron beam heat source inside a vacuum chamber. The process supports a wide range of materials including stainless steel. The process can not only fully build new metal parts but can also add material to existing parts for example for coatings, repair, and hybrid manufacturing applications. So as to elucidate the procedure for implementing the method of present invention, schematic figures are provided (Figure 1 and Figure 2).

Figure 1 depicts the schematic representation of the dilution effect occurring within the substrate following an L-DED (Laser-Deposition Directed Energy Deposition) process in a single pass of thickness "u" and machining clearance "v". The thickness of the coating "u" equals to the final maximum coating thickness after the machining process where the machining clearances are removed. Firstly, we define the base steel substrate chemical composition as "BS" and a stainless steel powder chemical composition as "SS" to be deposited, and assume that y grams of BS will dilute with X grams of deposited SS during the L-DED process. Once the process parameters are selected, a reference L-DED deposition is performed in a single pass and it is considered as "reference value", in Figure 1 denoted as "L-DED deposited reference stainless steel coating" or "RC". The maximum height of the crest, "v", and the height of the valleys, "u", of the deposited coating, as well as the chemical composition for each element of interest are measured. Using Equation (2), the ratio coefficients "$R_{[\%X]}$" related to the dilution effect are calculated for each element for the specific BS, SS, y, and x.

Figure 2 presents an overview of the parameters essential for determining the chemical composition of the counteract powder by means of Equation (1). The base steel substrate chemical composition is denoted by "BS" and the stainless steel is denoted by "SS" (as mentioned in the previous Figure 1). The target stainless steel coating chemical composition after L-DED deposition is defined as "SSC". The target u and v parameters, that determine the thickness of the coating layer, are also defined, determining the ration coefficients (dilution effect) that have to be used, previously calculated by Equation (2) using reference coating (RC) sample. Therefore, for the selected Z weight percentage of the counteract powder by all these data in Equation (1), the chemical composition of the counteract powder is calculated, element by element.

Hence, by preparing the calculated counteract powder and combining it (mixing it in the case of a stainless steel in the form of powder), in the predefined weight percentage (Z), with the (100-Z) weight percentage of stainless steel "SS", the desired chemical composition "SSC" and coating geometry (u and v) will be achieved after the L-DED process on the base steel substrate "BS".

According to a further aspect of the present invention, it is provided a stainless steel additive coating obtainable by the method of the present invention.

The inventors have surprisingly found that the method of the present invention as defined above allows obtaining a coating exhibiting the characteristic properties of stainless steels, ensuring high performance and corrosion protection to the steel substrate compared to coatings obtained by a single pass of standard L-DED methods.

Thus, in a preferred embodiment, the stainless steel additive coating obtainable by the method of the present invention is a single layer coating.

In another preferred embodiments, the thickness of the single layer of the stainless steel additive coating obtainable by the method of the present invention is from 0.6 mm to 3 mm, as it is indicated in Figure 1.

In the context of the present invention, the term "thickness" refers to the measurement of "u" as shown in Figure 1 through cross-sectional analysis under Scanning Electron Microscope (SEM) images or other imaging systems of the coated sample after grinding and polishing. First, the substrate line is identified, and a straight line is marked in the cross-section. This marking aids in visualizing the interface between the coating and the substrate. Then, the coating thickness is measured at various points along the marked substrate line. This can be done using the microscope's measurement tools or specialized image analysis software. The average coating thickness is provided.

Thus, the stainless steel additive coating obtainable by the method of the present invention has the desired chemically controlled stainless steel surface.

In a preferred embodiment, the stainless steel additive coating obtainable by the method of the present invention comprises Cr, being [%Crssc] between 10 wt.% and 35 wt.% respect to the total weight of said stainless steel additive coating.

In another preferred embodiment, the stainless steel additive coating obtainable by the method of the present invention comprises Ni, being [%Nissc] between 0.4 wt.% and 40 wt.% respect to the total weight of said stainless steel additive coating.

In another preferred embodiment, the stainless steel additive coating obtainable by the method of the present invention comprises Mo, being [%Mossc] between 0 wt.% and 10 wt.% respect to the total weight of said stainless steel additive coating.

The method of the present invention ultimately counteracts the dilution effect, resulting in the desired chemically controlled stainless steel surface ensuring high performance and corrosion protection to the component.

Therefore, another aspect of the present invention refers to a steel substrate coated with the stainless steel additive coating obtainable by the method as defined above.

Consequently, a final aspect of the present invention is the use of the stainless steel additive coating obtainable by the method as defined above in the production of stainless steel coated steel materials.

Through the description and the claims, the word "comprises" and variations thereof are not intended to exclude other technical features, components or steps.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

Additional advantages and features of the invention will become apparent to those skilled in the art upon examination of the description or may be learned by practice of the invention without undue burden.

## EXAMPLES

In the following, the invention will be further illustrated by means of Examples. The Examples should in no case be interpreted as limiting the scope of the invention, but only as an illustration of the invention.

### Example 1. Calculation of dilution coefficients for a modified 316 stainless steel powder deposited over a 42CrMo4 steel substrate.

A not standardised Metco 1016A powder (Oerlicon, Type 316L Austenitic Steel Powder for Laser Cladding and PTA, DSM-0418.0) was used, which has a higher silicon amount (around 2.3 wt. %) than the 316 grade stainless steel included in the A240 standard to obtain improved corrosion resistance properties. This modified 316L powder were deposited by L-DED technique over a commercial 42CrMo4 base steel substrate in a single reference layer at the selected L-DED process conditions. For $x_{g,316}$, of the deposited powder, y grams of the base steel substrate (herein denoted as $y_{g,42CrMo4}$) were melt. The actual composition of the stainless steel powder was analysed by inductively Coupled Plasma Emission Spectrometry (ICP). Internal method based on UNE-EN 10361. Carbon and Sulfur: Using an Automatic Infrared Analyzer. Internal method based on ASTM E1019. The base steel for the substrate and the stainless steel coating obtained by one pass L-DED deposition were analysed by Spark Emission Spectrometry. Internal method based on ASTM E1086. Nitrogen analysis was measured by all the samples by using an Automatic Thermal Conductivity Analyzer. Internal method based on ASTM E1019.

Taking into account Eq. (2) the ratio coefficient $R_{[\%X]}$ was calculated and listed in **Table 1** for each alloying element as it is shown below for Cr as example for this reference condition.

$$R_{[\%Cr]} = \frac{x_{g,316}}{y_{g,42CrMo4}} = \frac{[\%Cr_{RC}] - [\%Cr_{42CrMo4}]}{[\%Cr_{316}] - [\%Cr_{RC}]} \qquad \text{Eq. (2)}$$

where $R_{[\%Cr]}$ is the dilution coefficient for Cr for the reference value.

**Table 1: Chemical composition (wt. %) of the substrate, deposited powder and coating used to determine dilution coefficients in a reference state. Dilution coefficients for each alloying element are also listed.**

| | Chemical composition (wt. %) | | | | | | | | |
|---|---|---|---|---|---|---|---|---|---|
| | **C** | **Si** | **Mn** | **P** | **S** | **Cr** | **Mo** | **Ni** | **Fe** |
| **BS, substrate steel, 42CrMo4** | 0.42 | 0.20 | 0.75 | <0.015 | <0.005 | 1.10 | 0.22 | - | 97.3 |
| **Stainless Steel powder 316L-Si modified** | 0.011 | 2.30 | 1.49 | <0.015 | <0.005 | 17.0 | 2.95 | 12.0 | 64.3 |
| **Reference coating, L-DED, 1 pass** | 0.041 | 2.10 | 1.28 | 0.01 | <0.005 | 15.1 | 2.63 | 108 | 68.0 |
| **Dilution coefficients R$_{[\%X]}$** | 12.6 | 950 | 2.52 | - | - | 7.37 | 7.53 | 9.00 | 7.8 |

### Example 2. Preparation of a counteract powder to prepare a target stainless steel coating over a 42CrMo4 steel substrate in a single L-DED pass.

The necessary content of each alloying element in the counteract powder was calculated according to Equation (1) of the present invention as follows for Cr as an example by considering the same 42CrMo4 base of Example 1 and a different powder that in Example 1. The calculations are made with a 316 powder with a normal Si content according to ASTM 240 standard that means non-Si modified powder.

$$[\%Cr]_{CP} = \frac{\left( (R_{[\%Cr]}+1) \cdot [\%Cr_{316SSC}] \right) - \left( \left(1-\frac{Z}{100}\right) \cdot R_{[\%Cr]} \cdot [\%Cr_{316}] \right) - [\%Cr_{42CrMo4}]}{\frac{Z}{100} \cdot R_{[\%Cr]}} \text{ Eq. (1)}$$

Where $R_{[\%Cr]}$ is the dilution coefficient for Cr calculated in Example 1, and 316SSC is the target 316 stainless steel coating composition according to ASTM 240 to be coated in the 42CrMo4 base steel substrate.

With this counteract powder (CP) with alloying elements calculated with the selected Z fraction equal to 10 %, the target 316 grade stainless steel coating is obtained in a single L-DED pass over the 42CrMo4 base steel.

The same procedure could be applied by using another stainless steel for L-DED deposition just changing the concentration of the 316 grade stainless steel by the composition of a different stainless steel. Accordingly, the same procedure could be applied by using other steel substrate instead 42CrMo4 just changing the concentration of 42CrMo4 steel by other composition of steel substrate.

It should be noted that for some elements with a low content in stainless steel such as C, calculated $[\%C]_{CP}$ could be lower than 0. In those cases, the minimum possible C content in the counteract powder was targeted.

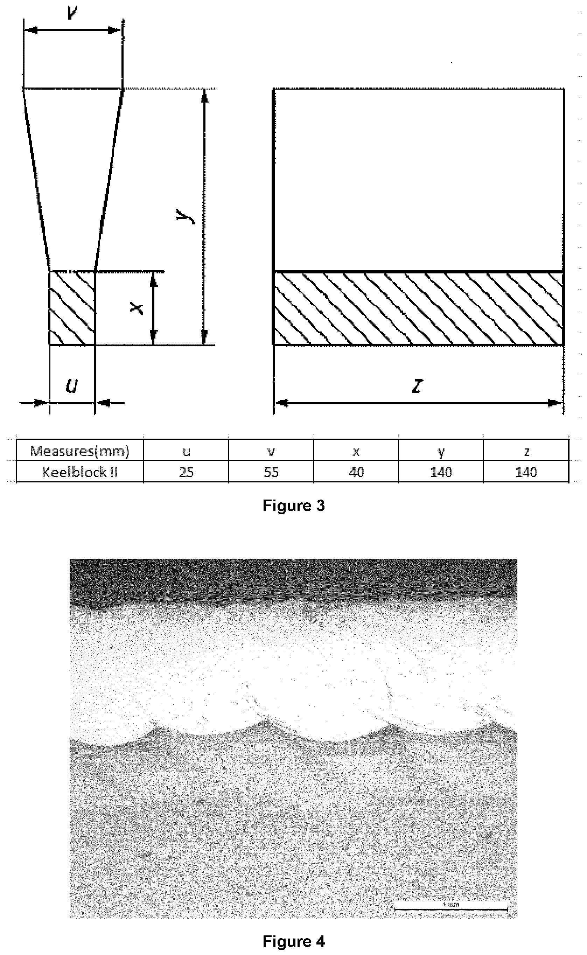

Once the chemical composition of the counteract powder was calculated, a melting trial was prepared with the target chemical composition (wt. %) of the alloy to be casted in the pilot plant listed in Table 2. A 50 kg melt was prepared in an induction furnace of 100 kg of capacity. 10.5 kg of Fe. 15 kg of Ni. 250 g of Si and 400 g of Mn were melted in the first place. Hereafter 22.5 kg of Cr were added in three steps. Once molten 1.5 kg of Mo were added. The melt was casted in three sand moulds for obtaining Y2 keel blocks (see scheme in **Figure 3).** The shadow area with "x" height which is usually used to extract tensile tests to measure mechanical properties was used to obtain the maximum possible sound bars of 100 mm length and with a diameter of 4 mm.

The bars were atomized in ATO Lab+ metal powder atomizer in Azterlan using the 35 kHz ultrasonic module and the following process parameters: argon flow 20 L/min; 70 % power pump; 100 A arc intensity and 80 % ultrasonic amplitude.

The actual chemical composition (wt. %) of the keelblock or the 4 mm diameter bars casted in the pilot plant is also shown in **Table 2.** The chemical composition of the counteract powder atomized in Azterlan is also shown in Table 2. It should be noted that a significant fading of Mn is observed after atomization process.

**Table 2: Target chemical composition (wt. %) of the alloy to be casted in the pilot plant, actual chemical composition (wt. %) of the keelblock or 4 mm diameter bars machined from it; and chemical composition of the counteract powder atomized in Azterlan.**

| | Chemical composition (wt. %) | | | | | | | | |
|---|---|---|---|---|---|---|---|---|---|
| | **C** | **Si** | **Mn** | **P** | **S** | **Cr** | **Mo** | **Ni** | **Fe** |
| **Target of casting trial** | ≤0.01 | 0.5 | 1 | Minimum possible <0.07 | Minimum possible <0.07 | 45.0 | 300 | 35.0 | Balance |
| **Keelblock or 4 mm bars** | 0.010 | 0.68 | 1.17 | <0.01 | 0.01 | 42.5 | 2.89 | 35.2 | Balance |
| **CP powder atomized from 4 mm cast bars** | 0.010 | 0.66 | 0.46 | <0001 | 0.01 | 40.6 | 3.05 | 36.6 | Balance |

### Example 3. Deposition of a single layer a stainless steel coating over a 42CrMo4 steel substrate by using the counteract powder of Example 2.

A 10% of the counteract powder (CP) of Example 2 is mixed in a tubular mixer with 90 % of a different 316-Si' modified stainless steel powder (SS) as they were considered in Example 1 and 2. The chemical composition of the mixed powder is listed in Table 3. This powder was deposited over a 42CrMo4' substrate (BS) which chemical composition in wt. % shown in Table 3 is also different to the base alloy used in Example 1 and 2.

The results of the L-DED 1 pass deposited stainless steel coating (SSC) performed at the selected conditions are also shown in **Table 3,** being as it was targeted according to the selected L-DED conditions that are different to those of Example 1 and thus the dilution coeffients are different too, but they are calculated in the same way. The microstructure of the deposited area is shown in **Figure 4** where the measured values of u and v were 860 $\mu$m and 870 $\mu$m, respectively.

Table 3: Chemical composition (wt. %) of the 42CrMo4 base steel (BS), stainless steel + counteract powder (SSCP) with 90 % of stainless steel powder (SS) and 10 % of the counteract powder (CP). Target chemical composition (wt. %) of the stainless steel alloy after deposition process. Chemical composition of the deposited stainless steel coating (SSC).

| | Chemical composition (wt. %) | | | | | | | | | |
|---|---|---|---|---|---|---|---|---|---|---|
| | C | Si | Mn | P | S | Cr | Mo | Ni | Cu | Fe |
| BS (42CrMo4) | 0.42 | 0.21 | 0.65 | 0.014 | <0,005 | 10.04 | 0.22 | 0.043 | 0.024 | 97.4 |
| SSCP | <0,010 | 2.11 | 1.37 | 0.010 | <0,005 | 18.8 | 309 | 14.4 | - | 67.2 |
| Target SSC | Minimum possible | 1.50 | 1.10 | - | - | 15 | 2.25 | 11.5 | - | - |
| Deposited SSC | 0.094 | 1.54 | 1.08 | 0.013 | 0007 | 15 | 2.26 | 11.2 | <0.10 | 64.0 |

Through a comparison of the chemical composition of the deposited powder with the target SSC specifications outlined in the reference deposited coating as well as the selected stainless steel which is not standardized yet. This is a modified 316 stainless steel alloy with a higher Si and slightly lower Cr than standardized value in ASTM A240/A240M - 11b.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1.   A method for preparing a stainless steel additive coating, comprising the steps of:

a) placing a base steel material as a substrate for coating;
b) providing a stainless steel material and a counteract powder; and
c) depositing by melting with an energy source the stainless steel material and the counteract powder from step b) on the surface of the base steel material to form a stainless steel additive coating layer on the surface of said base steel material;

**characterized in that**

the energy source is a laser beam; and
the counteract powder comprises elements selected from C, Mn, P, S, Si, Cr, Ni, Mo, N, Cu, Al, Ti, W, Nb, Ce, Ba, La, Ta, B and Fe, wherein the content of each element, except C, P, S, N and Fe, in the counteract powder is calculated according to equation (1)

$$[\%X_{CP}] = \frac{\left((R_{[\%X]}+1)\cdot[\%X_{SSC}]\right)-\left(\left(1-\frac{Z}{100}\right)\cdot R_{[\%X]}\cdot[\%X_{SS}]\right)-[\%X_{BS}]}{\frac{Z}{100}\cdot R_{[\%X]}} \qquad (1)$$

wherein

X is an element X selected from Mn, Si, Cr, Ni, Mo, Cu, Al, Ti, W, Nb, Ce, Ba, La, Ta and B;
$[\%X_{CP}]$ is the weight percent content of element X in the counteract powder respect to the total weight of the counteract powder;
Z is the percentage in weight of the counteract powder provided with (100-Z) percentage of the stainless steel material in step (b);
$[\%X_{SS}]$ is the weight percent content of element X in the stainless steel material with respect to the total weight of the stainless steel material;
$R_{[\%X]}$ is the ratio coefficient for element X;

[%X$_{BS}$] is the weight percent content of element X in the base steel material respect to the total weight of the base steel material; and

[%X$_{SSC}$] is the weight percent content of element X in the stainless steel coating resulting from step c) respect to the total weight of the stainless steel coating resulting from step c); and

wherein R$_{[\%X]}$ is calculated according to equation (2) under the method conditions of step c)

$$R_{[\%X]} = \frac{[\%X_{SSC}] - [\%X_{BS}]}{[\%X_{SS}] - [\%X_{SSC}]} \ (2).$$

2. The method according to claim 1, wherein the stainless steel material of step b) is in the form of powder, and the method further comprises a step between step b) and step c) of mixing the stainless steel powder and the counteract powder before the deposition.

3. The method according to claim 1, wherein the stainless steel material of step b) is in the form of powder, which is directly mixed in the deposition of step c) with the counteract powder.

4. The method according to claim 1, wherein the stainless steel of step b) is in the form of wire, which is directly mixed in the deposition of step c) with the counteract powder.

5. The method according to any one of claims 1 to 4, wherein the counteract powder comprises Cr and Ni, being [%Cr$_{CP}$] equal or higher than 11 wt. % and the [%Ni$_{CP}$] equal or higher than 0.4 wt.% respect to the total weight of the counteract powder.

6. The method according to claim 5, wherein the counteract powder comprises Mo, being [%Mo$_{CP}$] equal or higher than 1.5 wt. % respect to the total weight of the counteract powder.

7. The method according to any one of claims 1 to 6, wherein Z is between 5 % and 20 % respect to the total weight of both the stainless steel material and the counteract powder in step b).

8. The method according to any one of claims 1 to 7, wherein step c) is performed by using the Laser-mediated Direct Energy Deposition (L-DED) technique.

9. A stainless steel additive coating obtainable by the method according to any one of claims 1 to 8.

10. The stainless steel additive coating according to claim 9, wherein said coating comprises Cr, being [%Crssc] between 10 wt.% and 35 wt.% respect to the total weight of the stainless steel coating.

11. The stainless steel additive coating according to any one of claims 9 and 10, wherein said coating comprises Ni, being [%Nissc] between 0.4 wt.% and 40 wt.% respect to the total weight of the stainless steel coating.

12. The stainless steel additive coating according to any one of claims 9 to 11, wherein said coating is a single layer coating.

13. The stainless steel additive coating according to claim 12, wherein the thickness of the single layer coating is from 0.6 mm to 3 mm.

14. A steel substrate coated with the stainless steel additive coating according to any one of claims 9 to 13.

15. Use of the stainless steel additive coating according to any one of claims 9 to 13 in the production of stainless steel coated steel materials.

Figure 1

Figure 2

| Measures(mm) | u | v | x | y | z |
|---|---|---|---|---|---|
| Keelblock II | 25 | 55 | 40 | 140 | 140 |

Figure 3

Figure 4

Europäisches
Patentamt

European
Patent Office

Office européen
des brevets

# EUROPEAN SEARCH REPORT

Application Number

EP 23 38 3404

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 900 856 A1 (UNIV GRAZ TECH [AT]) 27 October 2021 (2021-10-27) * paragraphs [0053] - [0054], [0032] - [0037] * * paragraphs [0015] - [0016], [0023] - [0035], [0048] - [0094] * * paragraphs [0095] - [0097], [0103] - [0122], [0123] - [0126] * * claims 1-8,10,12-16; examples 1-25,26,27,29,30 * | 1-15 | INV. B22F10/25 B22F7/08 B22F9/08 B23K26/34 C23C24/10 B33Y10/00 C23C4/06 C23C4/073 C23C4/131 B23K26/342 |
| X | CN 113 059 153 A (UNIV HUNAN) 2 July 2021 (2021-07-02) | 9-15 | B23K35/30 C22C33/02 |
| A | * claims 1-4 * * example 1 * | 1-8 | C22C30/00 |
| A | EP 0 956 378 B1 (UNIV TENNESSEE RES CORP [US]) 2 April 2003 (2003-04-02) * claims 1-9 * * paragraphs [0013] - [0015], [0026] - [0031] * * paragraphs [0033] - [0035] * | 1-15 | |
| A | MAIER ANDREAS ET AL: "Tailoring material properties of duplex stainless steel by DED-LB/M and in situ alloying with elemental powders", JOURNAL OF LASER APPLICATIONS, AMERICAN INSTITUTE OF PHYSICS, 2 HUNTINGTON QUADRANGLE, MELVILLE, NY 11747, vol. 35, no. 4, 11 September 2023 (2023-09-11), XP012277648, ISSN: 1042-346X, DOI: 10.2351/7.0001119 [retrieved on 2023-09-11] * page 35, paragraph IV. Conclusions * | 1-15 | **TECHNICAL FIELDS SEARCHED (IPC)** B22F B23K B33Y C23C C22C |

The present search report has been drawn up for all claims

| Place of search | Date of completion of the search | Examiner |
|---|---|---|
| The Hague | 16 May 2024 | Ovejero, Elena |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 38 3404

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2024

| Patent document cited in search report | | Publication date | Patent family member(s) | | Publication date |
|---|---|---|---|---|---|
| EP 3900856 | A1 | 27-10-2021 | EP | 3900856 A1 | 27-10-2021 |
| | | | EP | 4139071 A1 | 01-03-2023 |
| | | | WO | 2021214106 A1 | 28-10-2021 |
| CN 113059153 | A | 02-07-2021 | NONE | | |
| EP 0956378 | B1 | 02-04-2003 | AU | 735712 B2 | 12-07-2001 |
| | | | BR | 9706988 A | 08-03-2000 |
| | | | CA | 2241316 A1 | 24-07-1997 |
| | | | CN | 1218517 A | 02-06-1999 |
| | | | DE | 69720531 T2 | 08-01-2004 |
| | | | EA | 199800640 A1 | 24-12-1998 |
| | | | EP | 0956378 A1 | 17-11-1999 |
| | | | HK | 1020586 A1 | 12-05-2000 |
| | | | IL | 124985 A | 31-10-2001 |
| | | | JP | 2001527601 A | 25-12-2001 |
| | | | KR | 19990077250 A | 25-10-1999 |
| | | | WO | 9726388 A2 | 24-07-1997 |

EPO FORM P0459

For more details about this annex : see Official Journal of the European Patent Office, No. 12/82